# EUROPEAN PATENT SPECIFICATION

(11) **EP 4 491 849 B1**
(45) Date of publication and mention of the grant of the patent: **15.04.2026**
(21) Application number: 24188005.3
(22) Date of filing: 11.07.2024
(51) Int. Cl.: F01D 5/00, B22F 10/25, B23K 26/342, B23P 6/00, B33Y 80/00

(54) **LOCALIZED REWORK USING DIRECTED ENERGY DEPOSITION**
LOKALISIERTE ÜBERARBEITUNG UNTER VERWENDUNG VON GERICHTETER ENERGIEABSCHEIDUNG
REPRISE LOCALISÉE UTILISANT UN DÉPÔT D'ÉNERGIE DIRIGÉE

(30) Priority: 14.07.2023 US 202318352984
(43) Date of publication of application: 15.01.2025
(73) Proprietor: RTX Corporation, Farmington, CT 06032 (US)
(72) Inventor: KERNOZICKY, Garrett, Mansfield (US); BOYER, Jesse R., Middletown (US); BAPTIST, Praba Kharan, Glastonbury (US); RAGHAVAN, Ashwin, Shrewsbury (US); BREITZMANN, Peter John, Aldie (US); VUKOVINSKY, Michael L., Chester (US)
(74) Representative: Dehns

(56) References cited:
- US-A1- 2011 099 810
- US-A1- 2017 370 220
- US-A1- 2018 002 039
- US-B1- 6 238 187

## Description

### FIELD

The present invention generally relates turbine engine components, and more particularly, to rework systems and methods the turbine engine components.

### BACKGROUND

Components, such as those used in turbine engines, may include defects or damage from either production of the component or from service use. Local rework to address these defects and/or damage to the components is generally a time and labor intensive process. Defects may be removed from the components and repair using a manual tungsten inert gas (TIG) weld process. This frequently results in excessive distortion of the components from the heat input nature of manual weld processing.

US 6238187 B1 relates to a method for repairing damage to an airfoil. The method provides for the removal of a section of the airfoil that substantially encompasses the damaged area, which consequently leaves a void and a cut-away surface in the airfoil. A replacement piece larger than the residual void is provided for use in replacing the section removed from the airfoil. A joining operation welds or otherwise joins the replacement piece to the airfoil at the cut-away surface to form a joined airfoil. The joined airfoil has a seam between the airfoil and the replacement piece. At least a portion of the seam is processed by laser shock peening to induce compressive residual stresses therein. US 2017370220 A1 relates to a method of developing a suggested blend repair to an airfoil includes the steps of: (a) storing history with regard to a particular airfoil in a particular engine; (b) taking information with regard to new damage to the particular airfoil; (c) reaching an initial blend recommendation based upon step (b); (d) assessing whether the initial blend recommendation of step (c) would be appropriate to repair the new damage based upon a consideration of steps (a)-(c); and (e) reporting a final blend recommendation. An airfoil repair recommendation system is also disclosed.

### SUMMARY

From a first aspect of the invention, a method as claimed in claim 1 is provided.

In various embodiments, the analysis further includes using a heat map to identify locations of the stator stage with a higher probability of having a defect. In various embodiments, the edge is a leading edge of the first stator vane. In various embodiments, the edge is a trailing edge of the first stator vane. In various embodiments, the removing includes removing a standardized portion of the first stator vane so that the first scallop more closely conforms to a theoretical model plus tolerances..

**In** various embodiments, the repaired portion has the standardized size and shape. In various embodiments, the repairing includes using an additive manufacturing process to rebuild the edge of the first stator vane. In various embodiments, the additive manufacturing process is a directed energy deposition process. In various embodiments, the blending process further includes shaping a leading edge and a trailing edge of the plurality of stator vanes.

Also disclosed herein is a method of repairing a stator stage for use with a turbine engine. The method includes receiving the stator stage including a plurality of stator vanes, the stator stage having a first defect identified on an edge of a first stator vane of the plurality of stator vanes, removing a portion of the edge of the first stator vane that includes the first defect to forma first scallop, repairing the edge of the first stator vane using an additive manufacturing process, including filling the first scallop to rebuild the edge of the first stator vane to form a repaired portion, and performing a blending process on the stator stage to smooth and shape the plurality of stator vanes, including the first stator vane.

**In** various embodiments, the method of repairing the stator stage for use with the turbine engine further includes analyzing the stator stage to identify the first defect on the edge of the first stator vane. In various embodiments, the edge is a leading edge of the first stator vane. In various embodiments, the edge is a trailing edge of the first stator vane. In various embodiments, the additive manufacturing process is a directed energy deposition process. In various embodiments, the first scallop has a predefined standardized size and shape and the repaired portion has the predefined standardized size and shape.

Also disclosed herein is a method of repairing a stator stage for use with a turbine engine. The method includes receiving the stator stage including a plurality of stator vanes, the stator stage having a first defect and a second defect, the first defect being on a first edge of a first stator vane of the plurality of stator vanes, and the second defect being on a second edge of the first stator vane, removing a first portion of the first edge including the first defect to form a first scallop, removing a second portion of the second edge including the second defect to form a second scallop, and repairing the first stator vane including filling the first scallop and the second scallop using an additive manufacturing process.

In various embodiments, the first edge is a leading edge and the second edge is a trailing edge. In various embodiments, the additive manufacturing process is a directed energy deposition process. In various embodiments, the first scallop and the second scallop have the same size and shape.

The foregoing features and elements may be combined in any combination, without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present invention is defined in the appended claims. A more complete understanding of the present invention however, may best be obtained by referring to the following detailed description and claims in connection with the following drawings. While the drawings illustrate various embodiments employing the principles described herein, the drawings do not limit the scope of the claims.
FIG. 1A illustrates a cross-sectional view of a gas-turbine engine, in accordance with various embodiments.
FIG. 1B illustrates a cross-sectional view of a compressor, in accordance with various embodiments.
FIG. 2 illustrates a stator stage for use in a turbine engine, in accordance with various embodiments.
FIG. 3 illustrates a defect heat map of defects in a stator stage that is used in a turbine engine, in accordance with various embodiments.
FIGS. 4A, 4B, and 4C illustrate a section of a stator stage including a defect, removing the defect, and repairing the section of the stator stage, in accordance with various embodiments.
FIGS. 5A and 5B illustrate a section of a stator stage with a defect removed from a leading edge of a stator vane, in accordance with various embodiments.
FIGS. 6A and 6B illustrate a section of a stator stage with a defect removed from a trailing edge of a stator vane, in accordance with various embodiments.
FIG. 7 illustrates a flow diagram of a method for repairing defects in a stator stage, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. While these exemplary embodiments are described in sufficient detail to enable those skilled in the art to practice the invention, it should be understood that other embodiments may be realized and that logical, chemical and mechanical changes may be made without departing from the scope of the invention. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

Disclosed herein are systems and methods for performing localized repairs of a stator stage. The localized repairs, or rework, may, in various embodiments, address defects or damage to cast components caused from either production or in service use. Historically, such repairs may have been performed by a manual tungsten inert gas (TIG) weld processes which is labor intensive and frequently results in excessive distortion and heat input from the nature of manual weld processing. The systems and methods disclosed herein, in various embodiments, use directed energy deposition (DED), or laser powder/wire deposition, as an additive manufacturing technique which may apply material with minimal heat input. In various embodiments, defect or damage mapping studies of production and in service components allows for maintenance shops to identify recurring areas of defects or damage. In various embodiments, these recurring areas can be defined into several standard repairs that allow for automation of repairs by the DED process. In various embodiments, the standard repair allows for process optimization as well as optimizing engineering requirements for acceptance (e.g., metallurgical impacts, structural impacts, aerodynamic impacts, etc.). In various embodiments, these standard repairs may enable definition of notches, lead in angles, and set aspect ratios that facilitate the DED equipment while minimizing subsequent processing and excess heat input. In various embodiments, defects or damage areas which do not fit into standard defined repairs may still be recovered by the manual TIG weld processes, but with much less impact to processing time, heat input, and distortion.

As used herein, "aft" refers to the direction associated with the tail (e.g., the back end) of an aircraft, or generally, to the direction of exhaust of the gas turbine. As used herein, "forward" refers to the direction associated with the nose (e.g., the front end) of an aircraft, or generally, to the direction of flight or motion.

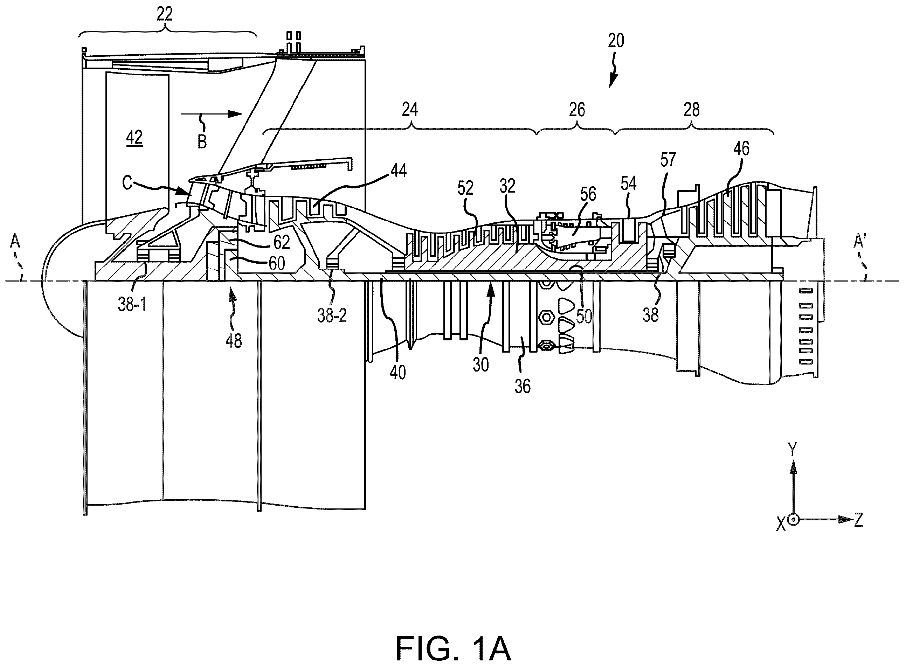

Referring now to FIG. 1A, a gas turbine engine 20 is illustrated, in accordance with various embodiments. Gas turbine engine 20 may be a two-spool turbofan that generally incorporates a fan section 22, a compressor section 24, a combustor section 26, and a turbine section 28. In operation, fan section 22 can drive air along a path of bypass airflow B while compressor section 24 can drive air along a core flow path C for compression and communication into combustor section 26 then expansion through turbine section 28. Although depicted as a turbofan gas turbine engine 20 herein, it should be understood that the concepts described herein are not limited to use with turbofans as the teachings may be applied to other types of turbine engines including three-spool architectures, single spool architecture or the like.

Gas turbine engine 20 may generally comprise a low speed spool 30 and a high speed spool 32 mounted for rotation about an engine central longitudinal axis A-A' relative to an engine static structure 36 or engine case via several bearing systems 38, 38-1, etc. Engine central longitudinal axis A-A' is oriented in the Z direction on the provided X-Y-Z axes. It should be understood that various bearing systems 38 at various locations may alternatively or additionally be provided, including for example, bearing system 38, bearing system 38-1, etc.

Low speed spool 30 may generally comprise an inner shaft 40 that interconnects a fan 42, a low pressure compressor 44 and a low pressure turbine 46. Inner shaft 40 may be connected to fan 42 through a geared architecture 48 that can drive fan 42 at a lower speed than low speed spool 30. Geared architecture 48 may comprise a gear assembly 60 enclosed within a gear housing 62. Gear assembly 60 couples inner shaft 40 to a rotating fan structure. High speed spool 32 may comprise an outer shaft 50 that interconnects a high pressure compressor 52 and high pressure turbine 54. A combustor 56 may be located between high pressure compressor 52 and high pressure turbine 54. A mid-turbine frame 57 of engine static structure 36 may be located generally between high pressure turbine 54 and low pressure turbine 46. Mid-turbine frame 57 may support one or more bearing systems 38 in turbine section 28. Inner shaft 40 and outer shaft 50 may be concentric and rotate via bearing systems 38 about the engine central longitudinal axis A-A', which is collinear with their longitudinal axes. As used herein, a "high pressure" compressor or turbine experiences a higher pressure than a corresponding "low pressure" compressor or turbine.

The core airflow may be compressed by low pressure compressor 44 then high pressure compressor 52, mixed and burned with fuel in combustor 56, then expanded over high pressure turbine 54 and low pressure turbine 46. Turbines 46, 54 rotationally drive the respective low speed spool 30 and high speed spool 32 in response to the expansion.

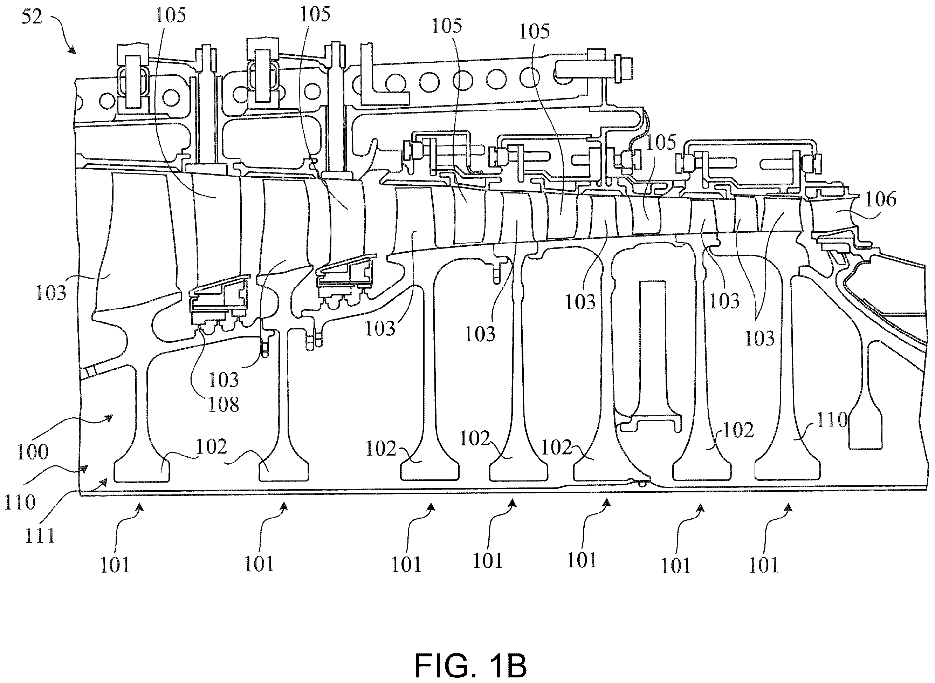

In various embodiments, and with reference to FIG. 1B, high pressure compressor 52 of the compressor section 24 of gas turbine engine 20 is provided. High pressure compressor 52 includes a plurality of blade stages 101 (i.e., rotor stages) and a plurality of vane stages 105 (i.e., stator stages). Blade stages 101 may each include an integrally bladed rotor ("IBR") 100, such that blades 103 and rotor disks 102 are formed from a single integral component (i.e., a monolithic component formed of a single piece). Although described herein with respect to an IBR 100, the present disclosure is not limited in this regard. For example, the inspection, analysis, and repair systems disclosed herein can be utilized with bladed rotors formed of separate blades 103 and rotor disks 102 and still be within the scope of this disclosure.

Blades 103 extend radially outward from the rotor disk 102. Gas turbine engine 20 may further include an exit guide vane stage 106 that defines the aft end of high pressure compressor 52. Although illustrated with respect to high pressure compressor 52, the present disclosure is not limited in this regard. For example, low pressure compressor 44 may include a plurality of blade stages 101 and vane stages 105, each blade stage in the plurality of blade stages 101 including IBR 100 and still be within the scope of this disclosure. In various embodiments, the plurality of blade stages 101 form a stack of IBRs 110, which define, at least partially, a rotor module 111 of the high pressure compressor 52 of the gas turbine engine 20.

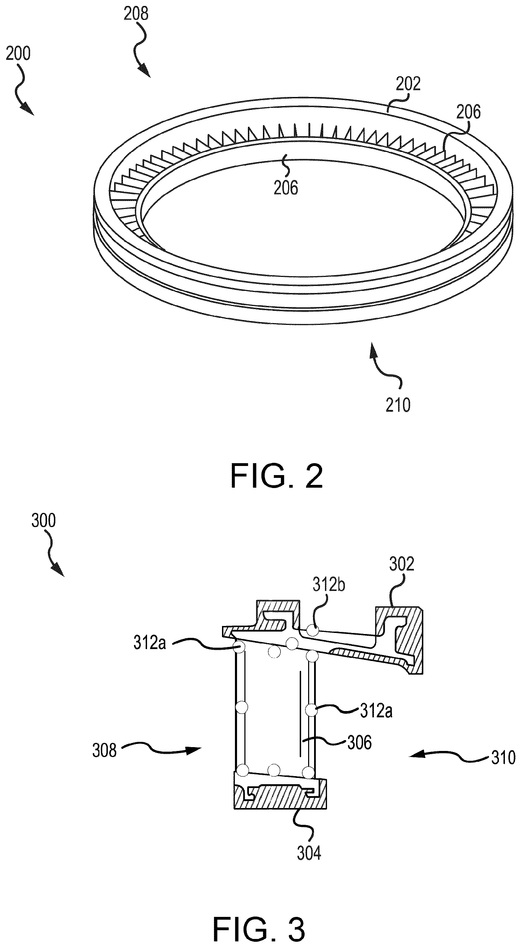

Referring now to FIG. 2, a stator stage 200 is illustrated, in accordance with various embodiments. In various embodiments, stator stage 200 may be one of the plurality of vane stages 105 described above in FIGS. 1A and 1B. In various embodiments, stator stage 200 may be representative of any stator stage used within a turbine engine (e.g., gas turbine engine 20). Stator stage 200 includes an outer diameter (OD) 202, an inner diameter (ID) 204, and a stator vane 206 of a plurality of stator vanes (also referred to as airfoils). Stator stage 200 has a leading edge 208 and a trailing edge 210, accordingly, each of the plurality of stator vanes (e.g., stator vane 206) has a leading edge and a trailing edge. The plurality of stator vanes (e.g., stator vane 206) extend around a circumference of ID 204 and each stator vane of the plurality of stator vanes (e.g., stator vane 206) extends from ID 204 to OD 202. Each stator vane of the plurality of stator vanes (e.g., stator vane 206) are designed and manufactured to a design specification. The design specification may be different for each stator stage 200 in a turbine engine. In various embodiments, the design specification may define a leading edge profile, a trailing edge profile, an angle with respect to OD 202, an orientation, a thickness, a curvature, and/or a position within the stator stage 200, among others.

Stator stage 200 may be manufactured as a single, monolithic component using a casting process, an additive manufacturing process, or other manufacturing process. In various embodiments, one or more defects may be introduced to one or more of OD 202, ID 204, and/or one or more of the plurality of stator vanes 206. In various embodiments, the defects may be surface defects. In various embodiments, the defects may be subsurface defects.

Referring now to FIG. 3, a defect heat map 300 illustrating common defect locations in stator stage 200 and stator vanes 206, in accordance with various embodiments. Defect heat map 300 illustrates a heat map of a cross section of a stator vane 206 of stator stage 200 including OD 202, ID 204, and a stator vane 206 having leading edge 208 and trailing edge 210, Defect heat map 300 further includes a plurality of vane defects 312a and a plurality of OD defects 312b. In various embodiments, defect heat map 300 may further illustrate a plurality of ID defects. Each vane defect 312a and OD defect 312b indicates a potential location for a defect to occur during manufacture of stator stage 200. That is, stator vane 206 may include zero defects or stator vane 206 may include one or more vane defects 312a. Similarly, OD 202 and/or ID 204 may include zero defects or each may include one or more OD defects 312b or ID defects. In various embodiments, each defect (e.g., vane defect 312a, OD defect 312b, etc.) may be on the surface of stator vane 206, OD 202, or ID 204. In various embodiments, each defect (e.g., vane defect 312a, OD defect 312b, etc.) may be below the surface (i.e., subsurface) of stator vane 206, OD 202, or ID 204.

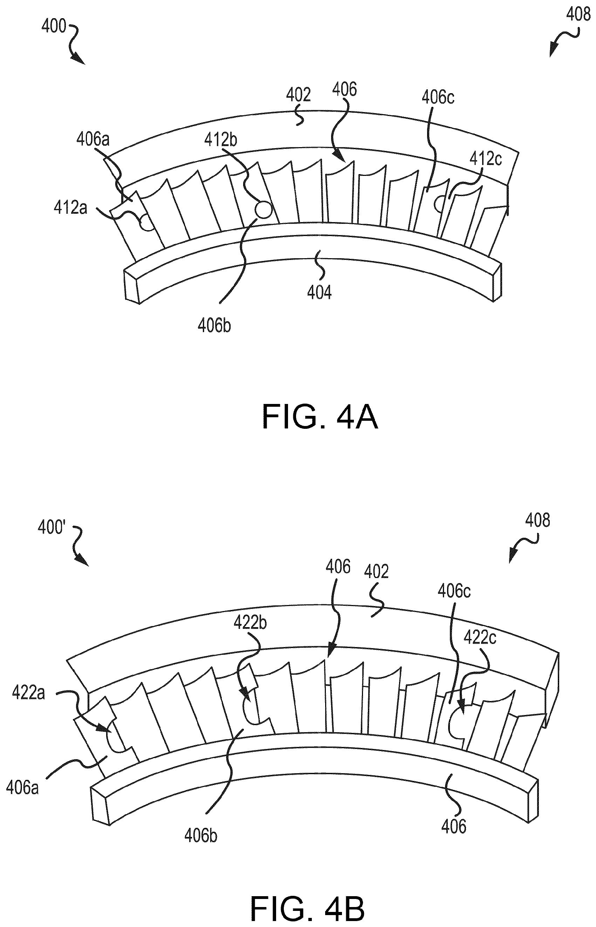

Referring now to FIGS. 4A-4C, a perspective view of a section 400 of a stator stage (e.g., stator stage 200) is illustrated, in accordance with various embodiments. While section 400 is illustrated for clarity and description purposes, it should be understood that section 400 remains integral with the stator stage (e.g., stator stage 200) as a whole. That is, the stator stage remains intact during the description of the systems and processes described below with respect to FIGS. 4A-4C. Section 400 includes an outer diameter (OD) 402, an inner diameter (ID) 404, and a plurality of stator vanes 406 including a first stator vane 406a, a second stator vane 406b, and a third stator vane 406c.

The stator stage, including section 400, is analyzed for defects as described above. In various embodiments, the defects may be introduced during manufacturing or during operational use of section 400. In various embodiments, different systems may be used to analyze the stator stage for defects such as visual inspection, x-ray, blue light scanner, microwave, video, and/or thermal examinations, among others. In various embodiments, the defect analysis systems may be focused on locations of the stator stage identified by defect heat map 300 described above in FIG. 3. In the illustrated embodiments, multiple defects are identified on multiple stator vanes 406. A first defect 412a is identified on the leading edge of first stator vane 406a, a second defect 412b is identified on the leading edge of second stator vane 406b, and a third defect 412c is identified on the leading edge of third stator vane 406c. In various embodiments, defects 412a, 412b, 412c may be on the surface of stator vanes 406a, 406b, 406c, may be below the surface of stator vanes 406a, 406b, 406c, or some combination thereof. These defects are exemplary and used for illustrated and descriptive purposes. It should be appreciated that the defects occurring on the leading edge of a stator vane 406 or a trailing edge of stator vane 406 may be corrected by the systems and methods described herein.

Referring now to FIG. 4B, section 400' is illustrated with defects 412a, 412b, 412c having been removed from stator vanes 406a, 406b, 406c. The portion of each stator vane 406a, 406b, 406c where the defect was removed may be referred to as a scallop, a cavity, a void, a pocket, a hollow, a crater, a pit, and/or cutting, among other terms. Section 400' illustrates a first scallop 422a where first defect 412a was removed, a second scallop 422b where second defect 412b was removed, and a third scallop 422c where third defect 412c was removed. Defects 412a, 412b, 412c may be removed using a grinder, a torch, a saw, a rotatory shaft tool, shears, a chisel, and/or a computer numerical control (CNC) machine, among others, to form scallops 422a, 422b, 422c.

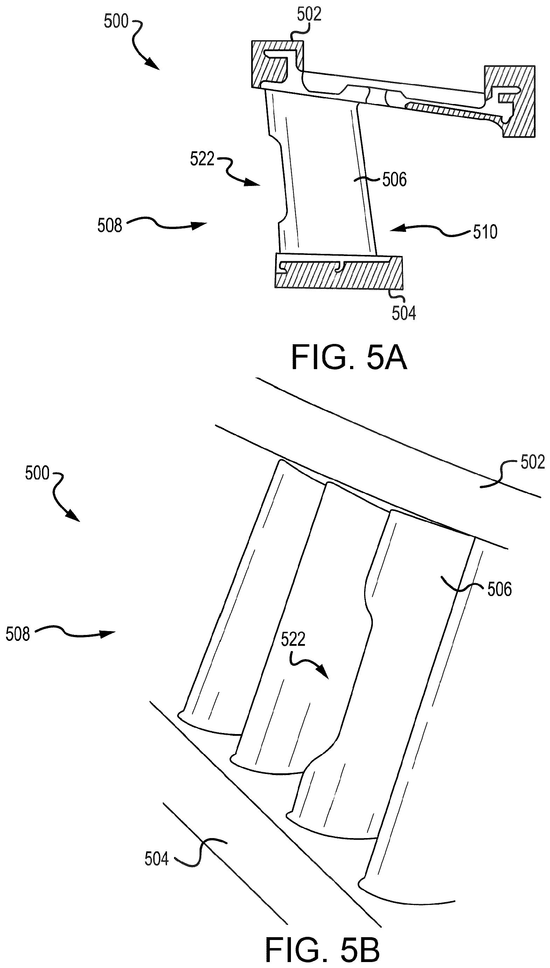

With momentary reference to FIGS. 5A and 5B, a side view and a perspective view of section 500 of a stator stage (e.g., stator stage 200) having a leading edge defect is illustrated, in accordance with various embodiments. In various embodiments, section 500 may be an example of section 400' described above in FIG. 4B. Section 500 includes an outer diameter (OD) 502, an inner diameter (ID) 504, a stator vane 506, a leading edge 508, a trailing edge 510, and a scallop 522 in stator vane 506. Scallop 522 may be formed from a portion from leading edge 508 of stator vane 506 having a defect. In various embodiments, scallop 522 may be sized to precisely remove the defect. In various embodiments, scallop 522 may be a uniform size to facilitate the automation of removing the defect and building stator vane 506 back, as will be discussed further below.

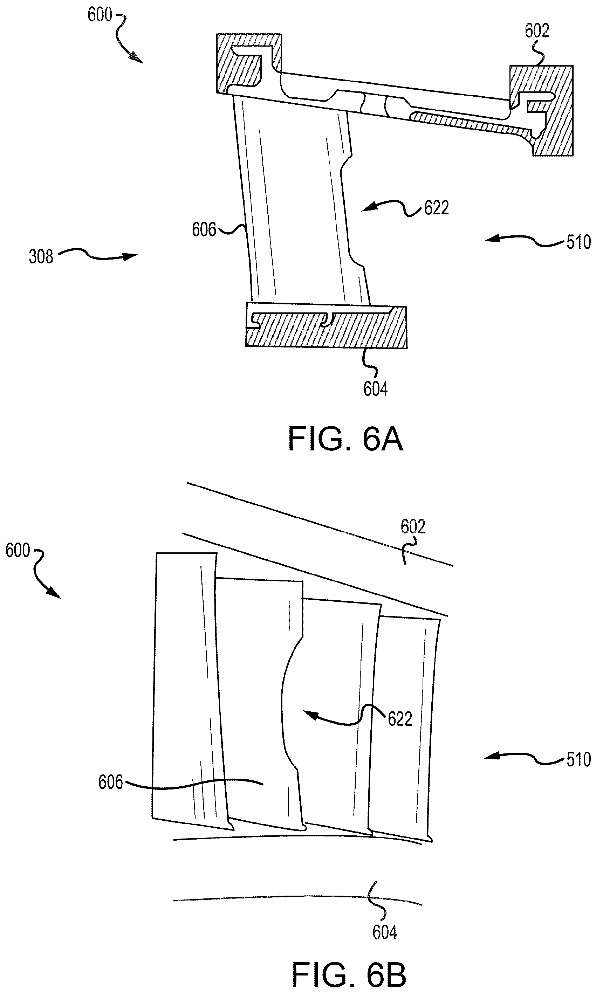

With momentary reference to FIGS. 6A and 6B, a side view and a perspective view of section 600 of a stator stage (e.g., stator stage 200) having a trailing edge defect is illustrated, in accordance with various embodiments. In various embodiments, section 600 may be an example of section 400' described above in FIG. 4B. Section 600 includes an outer diameter (OD) 602, an inner diameter (ID) 604, a stator vane 606, a leading edge 608, a trailing edge 610, and a scallop 622 in stator vane 606. Scallop 622 may be formed from a portion from trailing edge 610 of stator vane 606 having a defect. In various embodiments, scallop 622 may be sized to precisely remove the defect. In various embodiments, scallop 622 may be a uniform size to facilitate the automation of removing the defect and building stator vane 606 back, as will be discussed further below.

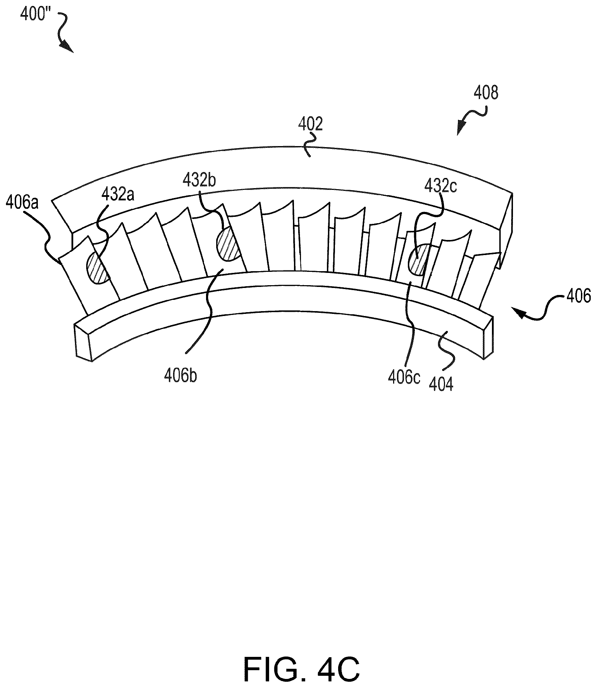

Referring now to FIG. 4C, section 400" is illustrated with scallops 422a, 422b, 422c being build back to restore stator vanes 406a, 406b, 406c to functionality, in accordance with various embodiments. defects 412a, 412b, 412c having been removed from stator vanes 406a, 406b, 406c. Section 400" includes a first repair 432a on first stator vane 406a, a second repair 432b on second stator vane 406b, and a third repair 432c on third stator vane 406c. In various embodiments, repairs 432a, 432b, 432c may be formed by a casting process. In various embodiments, repairs 432a, 432b, 432c may be formed by an additive manufacturing process such as a directed energy deposition (DED) process.

The DED process repairs scallops 422a, 422b, 422b by building stator vanes 406a, 406b, 406c back while applying minimal heat input to reduce the chances of introducing a new defect into section 400". In various embodiments, the DED process may be tuned to control for one or more of a laser power, a nozzle distance, a powder flow rate, a wire flow rate, and/or a speed of substrate movement. In various embodiments, the DED process may be standardized to match the defect removal process described in FIG. 4B. By standardizing the DED process, human interaction may be removed resulting in fewer damaged parts (e.g., by TIG weld process, human error, etc.) and shorter processing times. After repairing each defective stator vane 406, a finishing, or blending, [further elaborate on what blending is]process may be performed on the stator stage including section 400" to shape and smooth each stator vane 406 in the stator stage. In various embodiments, the blending operation uses a material removal process, such as a milling or computer numerical control (CNC) machining smooth each stator vane of the stator stage including section 400". The blending process may further define a blend profile for each stator vane.

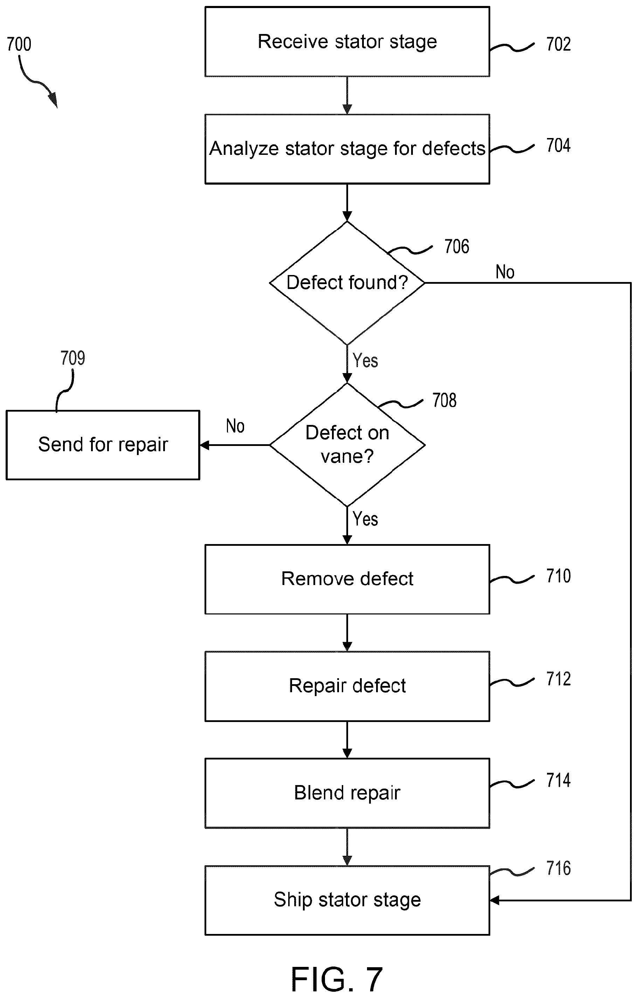

Referring now to FIG. 7, a flow diagram of a method 700 for repairing defects in stator vanes of a stator stage is illustrated, in accordance with various embodiments. Method 700 may be performed by one or more different systems including a system for detecting a defect, a system for removing the defect, a system for repairing the defect, and a system for blending the defect. In various embodiments, various aspects of method 700 may be automated and optimized to reduce the cost and time to repair defects in the stator stages.

At block 702, a stator stage is received. In various embodiments, the stator stage may be stator stage 200 described above in FIG. 2. In various embodiments, the stator stage may be designed for use in a turbine engine (e.g., gas turbine engine 20). At block 704, the stator stage is analyzed for defects. In various embodiments, the analysis may include one or more of x-ray, blue light scanner, microwave, video, and/or thermal examinations, among others.

At decision block 706, if no defects are found then the method 700 proceeds to block 716. If one or more defects are found, method 700 proceeds to decision block 708. At decision block 708, if the one or more defects are not on the stator vane (e.g., stator vane 206), method 700 proceeds to block 709 where the stator stage is sent for other repairs and method 700 ends. If the one or more defects are on the stator vane, method 700 proceeds to block 710.

At block 710, the one or more defects are removed from the stator vane. In various embodiments, the one or more defects may be located on a leading edge and/or a trailing edge of the stator vane. In various embodiments, the one or more defects may be removed using one or more of a grinder, a torch, a saw, a rotatory shaft tool, shears, a chisel, and/or a computer numerical control (CNC) machine, among others. In various embodiments, the amount of the material removed from the stator vane may be standardized to improve efficiency and throughput of the repairs to the stator vane.

At block 712, the stator vane is repaired. In various embodiments, the stator vane repair may include a casting process. In various embodiments, the stator vane repair may include an additive manufacturing process, such as a directed energy deposition (DED) process. During the stator vane repair process, the stator vane is built back to near original specifications. In various embodiments, the repair process may be standardized across the various stator vanes to improve efficiency and throughput.

At block 714, the stator vane is blended, or finished, to complete the repair process. The blending process may include smoothing and/or shaping of the stator vane including the leading edge and the trailing edge. In various embodiments, the blending, or finishing, process may be performed if no defects are found to ensure proper form and shape of the stator vanes in the stator stage. At block 716, the stator stage is ready to be shipped and/or installed.

In various embodiments, one or more of the various steps of method 700 may be performed by a controller coupled to one or more systems described above. The controller may comprise one or more processors configured to implement various logical operations in response to execution of instructions, for example, instructions stored on a non-transitory, tangible, computer-readable medium. The one or more processors can be a general purpose processor, a microprocessor, a microcontroller, a digital signal processor (DSP), an application specific integrated circuit (ASIC), a field programmable gate array (FPGA) or other programmable logic device, discrete or transistor logic, discrete hardware components, or any combination thereof. The controller may further comprise memory to store data, executable instructions, system program instructions, and/or controller instructions to implement the control logic of the controller.

System program instructions and/or controller instructions may be loaded onto a non-transitory, tangible computer-readable medium having instructions stored thereon that, in response to execution by a controller, cause the controller to perform various operations. The term "non-transitory" is to be understood to remove only propagating transitory signals per se from the claim scope and does not relinquish rights to all standard computer-readable media that are not only propagating transitory signals per se. Stated another way, the meaning of the term "non-transitory computer-readable medium" and "non-transitory computer-readable storage medium" should be construed to exclude only those types of transitory computer-readable media which were found in In Re Nuijten to fall outside the scope of patentable subject matter under 35 U.S.C. § 101.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods, and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Numbers, percentages, or other values stated herein are intended to include that value, and also other values that are about or approximately equal to the stated value, as would be appreciated by one of ordinary skill in the art encompassed by various embodiments of the present disclosure. A stated value should therefore be interpreted broadly enough to encompass values that are at least close enough to the stated value to perform a desired function or achieve a desired result. The stated values include at least the variation to be expected in a suitable industrial process, and may include values that are within 5% of a stated value. Additionally, the terms "substantially," "about" or "approximately" as used herein represent an amount close to the stated amount that still performs a desired function or achieves a desired result. For example, the term "substantially," "about" or "approximately" may refer to an amount that is within 5% of a stated amount or value.

Furthermore, no element, component, or method step in the present disclosure is intended to be dedicated to the public regardless of whether the element, component, or method step is explicitly recited in the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

Finally, it should be understood that any of the above-described concepts can be used alone or in combination with any or all of the other above-described concepts. Although various embodiments have been disclosed and described, one of ordinary skill in this art would recognize that certain modifications would come within the scope of this invention, as defined by the claims. Accordingly, the description is not intended to be exhaustive or to limit the principles described or illustrated herein to a precise form. Many modifications and variations are possible in light of the above teaching, within the scope of the claims.

## Claims

1. A method, comprising:
receiving a gas turbine stator stage (200; 400; 500; 600) including a plurality of stator vanes (406) disposed between an outer diameter (202; 402; 502; 602) and an inner diameter (204; 404; 504; 604);
analyzing the stator stage (200; 400; 500; 600) for defects (312a, 312b; 412a, 412b, 412c);
determining based on the analysis that there is a first defect (312a; 412a) on an edge of a first stator vane (206; 406a; 506; 606) of the plurality of stator vanes (406);
removing a portion of the first stator vane (206; 406a; 506; 606) including the first defect (312a; 412a) to form a first scallop (422a; 522; 622) on the edge of the first stator vane (406a; 506; 606);
repairing the first stator vane (406a; 506; 606) including filling the first scallop (422a; 522; 622) to fill the first stator vane (406a; 506; 606) to its original size and shape creating a repaired portion (432a); and
performing a blending process to the stator stage (400; 500; 600) including the first stator vane (406a; 506; 606) and the repaired portion (432a) to smooth the plurality of stator vanes (406). (406), **characterised in that**, the analysis identifies defects (312a, 312b; 412a, 412b, 412c) on a surface of the stator stage (300; 400; 500; 600) and below the surface of the stator stage (300; 400; 500; 600).

2. The method of claim 1, wherein the analysis further includes using a heat map (300) to identify locations of the stator stage (200; 400; 500; 600) with a higher probability of having a defect (312a, 312b; 412a, 412b, 412c).

3. The method of any preceding claim, wherein the edge is a leading edge (508) of the first stator vane (406a; 506), or wherein the edge is a trailing edge (610) of the first stator vane (406a; 606).

4. The method of any preceding claim, wherein the removing includes removing a standardized portion of the first stator vane (406a; 506; 606) so that the first scallop (422a; 522; 622) more closely conforms to a theoretical model plus tolerances.

5. The method of claim 4, wherein the repaired portion (432a) has the standardized size and shape.

6. The method of any preceding claim, wherein the repairing includes using an additive manufacturing process to rebuild the edge of the first stator vane (406a; 506; 606).

7. The method of claim 6, wherein the additive manufacturing process is a directed energy deposition process.

8. The method of any preceding claim, wherein the blending process further includes shaping a leading edge (508) and a trailing edge (610) of the plurality of stator vanes.

## Patentansprüche

1. Verfahren, umfassend:
Aufnehmen einer Gasturbinenstatorstufe (200; 400; 500; 600), die eine Vielzahl von Statorschaufeln (406) beinhaltet, die zwischen einem äußeren Durchmesser (202; 402; 502; 602) und einem inneren Durchmesser (204; 404; 504; 604) angeordnet ist;
Analysieren der Statorstufe (200; 400; 500; 600) auf Defekte (312a, 312b; 412a, 412b, 412c);
Bestimmen basierend auf der Analyse, dass ein erster Defekt (312a; 412a) an einer Kante einer ersten Statorschaufel (206; 406a; 506; 606) der Vielzahl von Statorschaufeln (406) vorliegt; Entfernen eines Abschnitts der ersten Statorschaufel (206; 406a; 506; 606), der den ersten Defekt (312a; 412a) beinhaltet, um eine erste Aushöhlung (422a; 522; 622) an der Kante der ersten Statorschaufel (406a; 506; 606) auszubilden;
Reparieren der ersten Statorschaufel (406a; 506; 606), das ein Füllen der ersten Aushöhlung (422a; 522; 622) beinhaltet, um die erste Statorschaufel (406a; 506; 606) auf ihre ursprüngliche Größe und Form zu füllen, wodurch ein reparierter Abschnitt (432a) entsteht; und
Durchführen eines Angleichungsvorgangs an der Statorstufe (400; 500; 600), der die erste Statorschaufel (406a; 506; 606) und den reparierten Abschnitt (432a) beinhaltet, um die Vielzahl von Statorschaufeln (406). (406) zu glätten, **dadurch gekennzeichnet, dass** die Analyse Defekte (312a, 312b; 412a, 412b, 412c) auf einer Oberfläche der Statorstufe (300; 400; 500; 600) und unter der Oberfläche der Statorstufe (300; 400; 500; 600) identifiziert.

2. Verfahren nach Anspruch 1, wobei die Analyse ferner ein Verwenden einer Wärmekarte (300) beinhaltet, um Stellen der Statorstufe (200; 400; 500; 600) mit einer höheren Wahrscheinlichkeit für das Aufweisen eines Defekts (312a, 312b; 412a, 412b, 412c) zu identifizieren.

3. Verfahren nach einem der vorhergehenden Ansprüche, wobei die Kante eine Vorderkante (508) der ersten Statorschaufel (406a; 506) ist, oder wobei die Kante eine Hinterkante (610) der ersten Statorschaufel (406a; 606) ist.

4. Verfahren nach einem der vorhergehenden Ansprüche, wobei das Entfernen ein Entfernen eines standardisierten Abschnitts der ersten Statorschaufel (406a; 506; 606) beinhaltet, so dass die erste Aushöhlung (422a; 522; 622) einem theoretischen Modell plus Toleranzen besser entspricht.

5. Verfahren nach Anspruch 4, wobei der reparierte Abschnitt (432a) die standardisierte Größe und Form aufweist.

6. Verfahren nach einem der vorhergehenden Ansprüche, wobei das Reparieren ein Verwenden eines additiven Herstellungsvorgangs beinhaltet, um die Kante der ersten Statorschaufel (406a; 506; 606) wiederherzustellen.

7. Verfahren nach Anspruch 6, wobei der additive Herstellungsvorgang ein gerichteter Energieabscheidungsvorgang ist.

8. Verfahren nach einem der vorhergehenden Ansprüche, wobei der Angleichungsvorgang ferner ein Ausbilden einer Vorderkante (508) und einer Hinterkante (610) der Vielzahl von Statorschaufeln beinhaltet.

## Revendications

1. Procédé, comprenant :
la réception d'un étage de stator de turbine à gaz (200 ; 400 ; 500 ; 600) comportant une pluralité d'aubes de stator (406) disposées entre un diamètre extérieur (202 ; 402 ; 502 ; 602) et un diamètre intérieur (204 ; 404 ; 504 ; 604) ;
l'analyse de l'étage de stator (200 ; 400 ; 500 ; 600) pour des défauts (312a, 312b ; 412a, 412b, 412c) ;
la détermination, sur la base de l'analyse, qu'il existe un premier défaut (312a ; 412a) sur un bord d'une première aube de stator (206 ; 406a ; 506 ; 606) de la pluralité d'aubes de stator (406) ;
le retrait d'une partie de la première aube de stator (206 ; 406a ; 506 ; 606) comportant le premier défaut (312a ; 412a) pour former une première échancrure (422a ; 522 ; 622) sur le bord de la première aube de stator (406a ; 506 ; 606) ;
la réparation de la première aube de stator (406a ; 506 ; 606) comportant le remplissage de la première échancrure (422a ; 522 ; 622) pour remplir la première aube de stator (406a ; 506 ; 606) à sa taille et à sa forme d'origine, créant une partie réparée (432a) ; et
la réalisation d'un procédé de meulage sur l'étage de stator (400 ; 500 ; 600) comportant la première aube de stator (406a ; 506 ; 606) et la partie réparée (432a) afin d'égaliser la pluralité d'aubes de stator (406). (406), **caractérisé en ce que** l'analyse identifie des défauts (312a, 312b ; 412a, 412b, 412c) sur une surface de l'étage de stator (300 ; 400 ; 500 ; 600) et sous la surface de l'étage de stator (300 ; 400 ; 500 ; 600).

2. Procédé selon la revendication 1, dans lequel l'analyse comporte en outre l'utilisation d'une carte thermique (300) pour identifier des emplacements de l'étage de stator (200 ; 400 ; 500 ; 600) avec une probabilité plus élevée de présenter un défaut (312a, 312b ; 412a, 412b, 412c).

3. Procédé selon une quelconque revendication précédente, dans lequel le bord est un bord d'attaque (508) de la première aube de stator (406a ; 506), ou dans lequel le bord est un bord de fuite (610) de la première aube de stator (406a ; 606).

4. Procédé selon une quelconque revendication précédente, dans lequel le retrait comporte le retrait d'une partie normalisée de la première aube de stator (406a ; 506 ; 606) de sorte que la première échancrure (422a ; 522 ; 622) se conforme plus étroitement à un modèle théorique plus tolérances.

5. Procédé selon la revendication 4, dans lequel la partie réparée (432a) présente la taille et la forme normalisées.

6. Procédé selon une quelconque revendication précédente, dans lequel la réparation comporte l'utilisation d'un procédé de fabrication additive pour reprendre le bord de la première aube de stator (406a ; 506 ; 606).

7. Procédé selon la revendication 6, dans lequel le procédé de fabrication additive est un procédé de dépôt d'énergie dirigée.

8. Procédé selon une quelconque revendication précédente, dans lequel le procédé de meulage comporte en outre le façonnage d'un bord d'attaque (508) et d'un bord de fuite (610) de la pluralité d'aubes de stator.
